# EUROPÄISCHE PATENTANMELDUNG

(11) **EP 3 469 866 A1**
(43) Veröffentlichungstag der Anmeldung: **17.04.2019**
(21) Anmeldenummer: 18401080.9
(22) Anmeldetag: 13.09.2018
(51) Int. Cl.: A01B 69/04, G05D 1/02

(54) **LANDWIRTSCHAFTLICHE MASCHINE**

(30) Priorität: 11.10.2017 DE 102017123592
(71) Anmelder: Amazonen-Werke H. Dreyer GmbH & Co. KG, 49205 Hasbergen (DE)
(72) Erfinder: Kötter, Heiner, 49086 Osnabrück (DE); Düman, Fadil, 28197 Bremen (DE)

(57) **Zusammenfassung**

Landwirtschaftliche Maschine mit einem Planungssystem zur Planung der Bearbeitung eines Feldes, wobei das Planungssystem einen Jobrechner und eine Terminaleinheit umfasst, wobei der Jobrechner zum Erzeugen feldspezifischer Referenzlinien eingerichtet ist, wobei eine Referenzlinie durch einen Start- und einen Endpunkt begrenzt wird und basierend auf dieser zumindest einen Referenzlinie aneinander grenzende Fahrgassen für einen Bearbeitungsplan abgeleitet werden, wobei die Fahrgassen im Wesentlichen parallel zur Referenzlinie liegen und zur Anordnung der Fahrgassen maschinenspezifische Daten der landwirtschaftlichen Maschine berücksichtigt werden und die zumindest eine Referenzlinie und der abgeleitete Bearbeitungsplan auf der Terminaleinheit angezeigt wird und/oder die zumindest eine Referenzlinie und der abgeleitete Bearbeitungsplan von einem Benutzer mittels der Terminaleinheit bearbeitet werden können. Um eine landwirtschaftliche Maschine mit einem Planungssystem, welches dazu eingerichtet ist dem Benutzer das nachträgliche Bearbeiten des Bearbeitungsplans zu erlauben, zu schaffen ist vorgesehen, dass zumindest eine der aneinander grenzenden Fahrgassen des Bearbeitungsplans abhängig von den maschinenspezifischen Daten der landwirtschaftlichen Maschine durch den Benutzer nachträglich verschiebbar ist und/oder die zumindest eine Fahrgasse durch den Benutzer nachträglich zumindest annährend beliebig verschiebbar ist, so dass durch den Bearbeitungsplan das Feld zumindest nahezu optimal deckend bearbeitet wird.

## Beschreibung

Die Erfindung betrifft eine landwirtschaftliche Maschine gemäß dem Oberbegriff des Patentanspruches 1.

Eine derartige landwirtschaftliche Maschine mit einem Planungssystem ist in EP 2 927 767 A2 beschrieben. In diesem Fall ist die landwirtschaftliche Maschine als Feldhäcksler ausgeführt. Das Planungssystem dient dazu, einen Bediener bei der Bearbeitung eines Feldes durch den Feldhäcksler zu unterstützen. Hierzu wird durch das Planungssystem ein Bearbeitungsplan erstellt. Der Bearbeitungsplan beinhaltet beispielsweise abzufahrende Fahrgassen.

Der Feldhäcksler umfasst in üblicher Weise eine Fahrerkabine von wo aus der Bediener die Maschine steuert. In der Fahrerkabine ist eine Terminaleinheit angeordnet. Die Terminaleinheit ist Teil des Planungssystems und dient der Anzeige und Bearbeitung des durch das Planungssystem erstellten Bearbeitungsplans.

Das Planungssystem umfasst neben der Terminaleinheit zudem einen Jobrechner. Der Jobrechner ist in diesem Fall ebenfalls in der Fahrerkabine angeordnet und dient unter anderem dem Generieren und Speichern von feldspezifischen Daten.

Die feldspezifische Daten können beispielsweise geografische Koordinaten enthalten. Insbesondere ist vorgesehen, dass die feldspezifischen Daten Referenzlinien enthalten. Eine Referenzlinie wird durch einen Start- und einen Endpunkt gebildet. Die geografischen Koordinaten können während einer Überfahrt des zu bearbeitenden Feldes aufgenommen werden. Hierzu verfügen gattungsgemäße landwirtschaftliche Maschinen über entsprechende GPS-Systeme.

Basierend auf einer solchen Referenzlinie ist der Jobrechner dazu eingerichtet einen Bearbeitungsplan abzuleiten. Der Bearbeitungsplan weist im Wesentlichen parallel zu der zur Ableitung des Bearbeitungsplans genutzten Referenzlinie liegende Fahrgassen auf. Der Jobrechner berücksichtigt bei der Ableitung des Bearbeitungsplans maschinenspezifische Daten. Die maschinenspezifischen Daten umfassen in diesem Fall die Arbeitsbreite des Feldhäckslers. Die Arbeitsbreite des Feldhäckslers wird von dem Planungssystem zugeordneten Jobrechner genutzt, um den Abstand zwischen den einzelnen Fahrgassen zu bestimmen.

Nachteilig bei dem durch EP2 927 767 A2 beschriebenen Planungssystem ist, dass ein vom Jobrechner abgeleiteter Bearbeitungsplan nicht nachträglich bearbeitet werden kann. Dies ist besonders nachteilig, da der Benutzer nicht zwischen verschiedenen Fahrweisen wechseln kann, ohne von dem berechnetem Bearbeitungsplan abzuweichen.

Der Erfindung liegt daher die Aufgabe zugrunde, eine landwirtschaftliche Maschine mit einem Planungssystem, welches dazu eingerichtet ist dem Benutzer das nachträgliche Bearbeiten des Bearbeitungsplans zu erlauben, zu schaffen.

Die Aufgabe wird erfindungsgemäß dadurch gelöst, dass zumindest eine der aneinander grenzenden Fahrgassen des Bearbeitungsplans abhängig von den maschinenspezifischen Daten der landwirtschaftlichen Maschine durch den Benutzer nachträglich mittels geeigneter Mittel verschiebbar ist und/oder die zumindest eine Fahrgasse durch den Benutzer nachträglich zumindest annährend beliebig verschiebbar ist, so dass durch den Bearbeitungsplan das Feld zumindest nahezu optimal deckend bearbeitet wird.

Vorteilhaft ist hierbei, dass der Benutzer die erste Überfahrt des zu bearbeitenden Feldes, welche in erster Linie zur Generierung einer Referenzlinie genutzt wird, bereits zur Bearbeitung des Feldes nutzen kann. Anschließend wird vom Jobrechner aus der generierten Referenzlinie ein Bearbeitungsplan mit aneinander grenzenden Fahrgassen abgeleitet.

Üblicherweise werden besonders mit Maschinen mit einer Arbeitsbreite, die etwa der Spurweite des Traktors entspricht, die ersten Fahrspuren bei der Bearbeitung eines Feldes in Anschlussfahrweise bearbeitet. Anschlussfahrweise heißt, dass aneinander grenzende Fahrgasse nacheinander bearbeitet werden. Anschließend wird die Bearbeitung in Beetefahrweise fortgesetzt, um die Belastung des Bodens durch Kurvenfahrten möglichst gering zu halten. Beetefahrweise heißt, dass zwischen zwei nacheinander zu bearbeitenden Fahrgassen zumindest eine Fahrspur mit voller Arbeitsbreite der landwirtschaftlichen Maschine zuerst frei gelassen und später bearbeitet wird. Um aus der Anschlussfahrweise in die Beetefahrweise zu wechseln ist es notwendig den Bearbeitungsplan nachträglich zu bearbeiten, was in einfacher Weise durch eine Ausführungsform der Erfindung möglich ist.

Eine mögliche Ausführungsform sieht vor, dass zumindest die im Feldinnern liegende, der Feldgrenze nahste Fahrgasse des Bearbeitungsplans abhängig von den maschinenspezifischen Daten der landwirtschaftlichen Maschine durch den Benutzer nachträglich verschiebbar ist und/oder die zumindest eine Fahrgasse durch den Benutzer mittels geeigneter Mittel nachträglich zumindest annährend beliebig verschiebbar ist. In einfacher Weise wird so sichergestellt, dass gesetzliche Sicherheitsabstände zur Feldgrenze vom Benutzer eingehalten werden können, während das Feld weiterhin durch den Bearbeitungsplan zumindest nahezu optimal abdeckend bearbeitet wird. Weiter ist denkbar, dass die weiteren vom Jobrechner abgeleiteten Fahrspuren sich nachträglich an der der Feldgrenze nahsten, vom Benutzer verschobenen Fahrgasse ausrichten. Die dadurch entstehende Überschneidung bzw. Freifläche liegt im Feldinnern, wo sie leichter auszugleichen ist als am Feldrand.

Um dem Benutzer eine Orientierungshilfe zu geben, ist vorgesehen, dass die dem Planungssystem zugeordnete Terminaleinheit dazu eingerichtet ist, alle Fahrgassen zu nummerieren und die Nummerierung dem Benutzer anzuzeigen. Weiter ist vorgesehen, dass die Nummerierung der Fahrgassen nach einer Verschiebung der zumindest einen Fahrgasse durch den Benutzer erhalten bleibt. So ist für den Benutzer leicht nachzuvollziehen ob er den Bearbeitungsplan in von ihm gewünschter Weise bearbeitet hat.

Eine Ausführungsform der Erfindung sieht vor, dass die Terminaleinheit zur Markierung von zumindest einer Fahrgasse eingerichtet ist, dass die Markierung der Fahrgassen durch den Benutzer mittels geeigneter Mittel anhand der Nummerierung einstellbar ist. Dies ist besonders vorteilhaft zur Orientierung für den Benutzer für den Abschnitt der Bearbeitung des Feldes, welcher in Beetefahrweise durchgeführt wird. Anhand der Nummerierung kann der Benutzer in einfacher Weise in regelmäßigen Abständen Fahrgassen für die Beetefahrweise mittels geeigneter Mittel markieren und kann sich so während der Bearbeitung darauf konzentrieren ein möglichst optimales Arbeitsergebnis zu erzielen.

Der Betrieb der vorstehend beschriebenen landwirtschaftlichen Maschine mit Planungssystem zeichnet sich durch die folgenden Verfahrensschritte aus:
- Erfassen von zumindest jeweils einem feldinternen Start- und Endpunkt durch Überfahrt auf dem Feld zum Erstellen von zumindest einer feldspezifischen Referenzlinie,
- Erstellen der zumindest einen feldspezifischen Referenzlinie aus einem feldinternen Start- und einem feldinternen Endpunkt,
- Ableitung von zumindest einem Bearbeitungsplan basierend auf der feldspezifischen Referenzlinie
   ∘ Nummerierung der Fahrgassen,
   ∘ Markierung zumindest einer Fahrgasse,
   ∘ Anzeige des Bearbeitungsplan auf der Terminaleinheit,
- und/oder Verschiebung der aneinander grenzenden Fahrgassen des Bearbeitungsplans abhängig von den maschinenspezifischen Daten der landwirtschaftlichen Maschine durch den Benutzer und/oder zumindest annährend beliebige Verschiebung dieser Fahrgassen durch den Benutzer.
Der Bearbeitungsplan kann so in einfacher Weise vom Benutzer nachträglich mittels geeigneter Mittel angepasst werden. Die Vorteile eines rechnerbasierten Bearbeitungsplans werden so auch bei wechselnden Fahrweisen nutzbar.

Weitere Einzelheiten der Erfindung sind der Beispielsbeschreibung und den Zeichnungen zu entnehmen. Die Zeichnungen zeigen
- Fig.1: eine landwirtschaftliche Maschine mit Planungssystem in Seitenansicht,
- Fig.2: eine schematische Darstellung der Terminaleinheit und eines angezeigten, unbearbeiteten Bearbeitungsplans,
- Fig.3: eine schematische Darstellung der Terminaleinheit und des Bearbeitungsplanes aus Fig.2 in bearbeiteter Fassung.

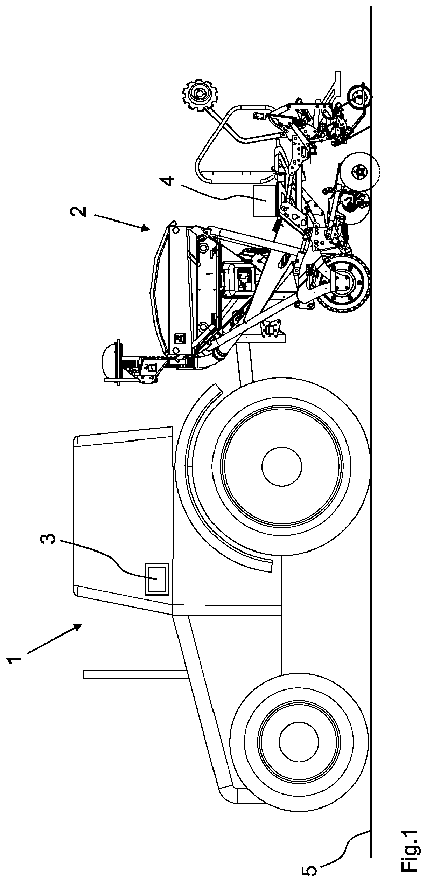

Als Beispiel für eine landwirtschaftliche Maschine mit Planungssystem zur Planung der Bearbeitung eines Feldes ist in Fig. 1 eine landwirtschaftliche Zugmaschine 1 mit angehängter Sämaschine 2 dargestellt. Das Planungssystem umfasst im Wesentlichen eine Terminaleinheit 3 und einen Jobrechner 4. Die Terminaleinheit 3 ist in der dargestellten Ausführungsform auf der landwirtschaftlichen Zugmaschine 1 angeordnet, genauer in der Fahrerkabine der landwirtschaftlichen Zugmaschine 1. Dort kann die Terminaleinheit 3 in einfacher Weise von dem Benutzer bedient werden.

Der Jobrechner 4 befindet sich in dieser Ausführungsform auf der Sämaschine 2 und ist über nicht dargestellte Kabel mit der Terminaleinheit 3 und weiteren Systemen der Zugmaschine 1 verbunden. Die weiteren Systeme der Zugmaschine 1 umfassen zumindest ein übliches GPS-System. In einfacher Weise ist der Jobrechner 4 auf diesem Wege dazu eingerichtet feldspezifische geografische Koordinaten zu erfassen und zu verarbeiten. Während der Überfahrt eines zu bearbeitenden Feldes 5 zeichnet der Jobrechner 4 geografische Punkte auf, aus denen der Jobrechner 4 anschließend eine feldspezifische Referenzlinie generiert.

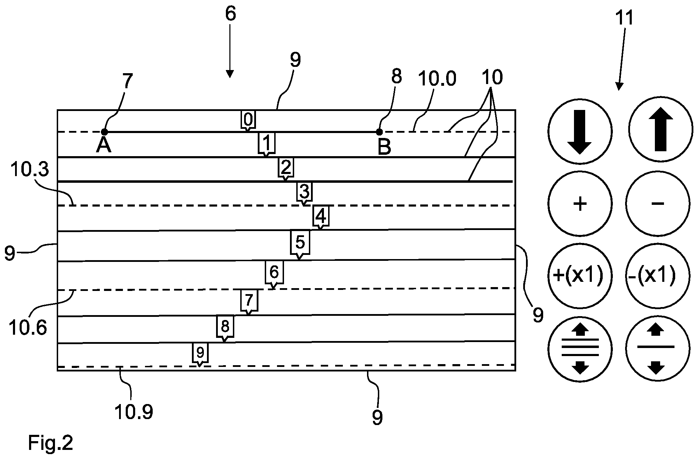

Ein von der feldspezifischen Referenzlinie abgeleiteter, unbearbeiteter Bearbeitungsplan 6 ist in Fig. 2 zu sehen, wie er in ähnlicher Weise auf der Terminaleinheit 3 angezeigt wird. Die Referenzlinie wird durch einen Startpunkt 7, welcher mit "A" gekennzeichnet ist, und einen Endpunkt 8, welcher mit "B" gekennzeichnet ist, begrenzt. Da die geografischen Punkte während der Überfahrt des zu bearbeitenden Feldes 5 aufgezeichnet wurden liegt die Referenzlinie im Feldinnern. Das Feldinnere wird begrenzt durch Feldgrenzen 9.

Der Jobrechner 4 erzeugt den dargestellten Bearbeitungsplan 6 indem er basierend auf einer ersten Fahrgasse 10.0 die weiteren Fahrgassen 10 ableitet.

Die Fahrgasse 10.0 verläuft durch die Referenzlinie mit ihrem Startpunkt 7 und Endpunkt 8. Die weiteren aneinander grenzenden Fahrgassen 10 werden vom Jobrechner 4 parallel zu der Fahrgasse 10.0 in einem Abstand zueinander angeordnet, der vorzugsweise einer Arbeitsbreite der genutzten landwirtschaftlichen Maschine entspricht.

Die Terminaleinheit 3 umfasst neben der Anzeigefläche zur Darstellung des Bearbeitungsplans 6 ebenfalls eine Bedienfläche 11. Die Bedienfläche 11 kann als berührungsempfindliches Display ausgeführt sein. Ebenso denkbar ist, dass die Bedienfläche 11 durch einen nicht dargestellten Controller mit separaten Bedienknöpfen gebildet wird. Mit Hilfe der Bedienfläche 11 kann die Terminaleinheit 3 vom Benutzer dazu verwendet werden den Bearbeitungsplan 6 nachträglich zu bearbeiten.

Des Weiteren soll in einer Ausführungsform der Erfindung die dem Planungssystem zugeordnete Terminaleinheit 3 dazu eingerichtet sein, alle Fahrgassen 10 zu nummerieren und die Nummerierung anzuzeigen, wie Fig. 2 zeigt. Darüber hinaus soll die Terminaleinheit 3 dazu eingerichtet sein zumindest eine der Fahrgassen 10 zu markieren. Diese Markierung soll vom Benutzer anhand der Nummerierung einstellbar sein und ist in Fig. 2 durch die gestrichelten Fahrgassen 10 in wiederkehrenden, gleichbleibenden Abständen angedeutet.

Üblicherweise wird zur Bearbeitung des Feldes 5 mit einer Sämaschine 2 wie sie in Fig. 1 dargestellt ist die Beetefahrweise der Anschlussfahrweise vorgezogen. Zur optischen Unterstützung des Fahrers bei der Durchführung der Beetefahrweise werden daher in Fig. 2 von der Fahrgasse 10.0 beginnend jede dritte Fahrgasse 10 markiert und somit gestrichelt dargestellt. Somit ergibt sich, dass neben der Fahrgasse 10.0 auch die Fahrgassen 10.3, 10.6 und 10.9 markiert sind. Es ist vorgesehen, dass die markierten Fahrgassen nacheinander bearbeitet werden, so dass zwischen den markierten Fahrgassen Beete entstehen.

Da bei der Bearbeitung eines Feldes jedoch zumeist mit der Anschlussfahrweise begonnen und erst später zur Beetefahrweise gewechselt wird, ist es notwendig, dass der von dem Jobrechner 4 abgeleitete Bearbeitungsplan 6 nachträglich durch den Benutzer bearbeitet werden kann. So ist der Bearbeitungsplan 6 in der Hinsicht vom Benutzer zu bearbeiten, dass bereits bearbeitete Fahrgassen 10 nicht zur weiteren Bearbeitung berücksichtigt werden. In einfacher Weise wird dies dadurch erreicht, dass zumindest eine der aneinander grenzenden Fahrgassen 10 des Bearbeitungsplans 6 abhängig von den maschinenspezifischen Daten der landwirtschaftlichen Maschine durch den Benutzer nachträglich verschiebbar ist und/oder die zumindest eine Fahrgasse 10 durch den Benutzer nachträglich zumindest annährend beliebig verschiebbar ist, so dass durch den Bearbeitungsplan 6 das Feld 5 zumindest nahezu optimal deckend bearbeitet wird. Eine weitere Ausführungsform sieht vor, dass zumindest die im Feldinnern liegende, der Feldgrenze 9 nahste Fahrgasse 10 des Bearbeitungsplans 6 abhängig von den maschinenspezifischen Daten der landwirtschaftlichen Maschine durch den Benutzer nachträglich mittels geeigneter Mittel verschiebbar ist und/oder die zumindest eine Fahrgasse 10 durch den Benutzer nachträglich zumindest annährend beliebig verschiebbar ist.

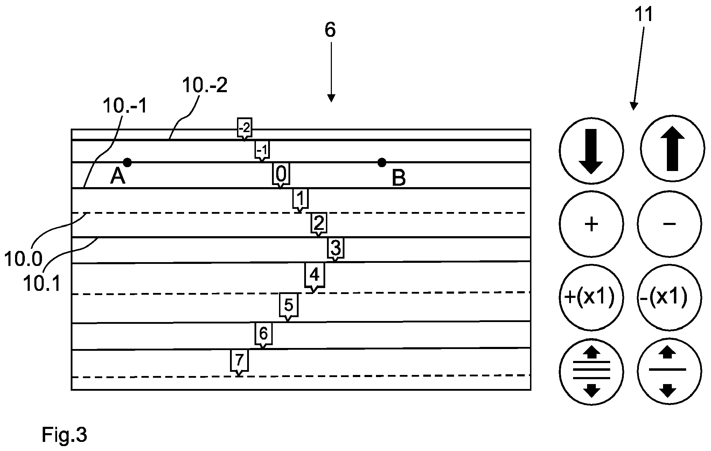

Durch diese Maßnahmen ist es dem Benutzer möglich, die erste markierte Fahrgasse 10 so zu verschieben, dass sie mit dem Übergang von Anschlussfahrweise zu Beetefahrweise übereinstimmt. In Fig. 3 ist der Bearbeitungsplan 6 aus Fig. 2 in bearbeiteter Fassung zu sehen. Fig. 3 zeigt, dass die Fahrgassen 10.-2 und 10.-1 nacheinander in Anschlussfahrweise bearbeitet wurden. Bei der Fahrgasse 10.0 soll mit der Beetefahrweise begonnen werden. Im Vergleich zu Fig. 2 wurde die Fahrgasse 10.0 in Fig. 3 daher vom Benutzer in Richtung Feldmitte verschoben. Es ist zu sehen, dass die ursprüngliche Nummerierung beibehalten wurde nach der Verschiebung der Fahrgassen 10 mittels geeigneter Mittel durch den Benutzer. Es wurden lediglich die Fahrgassen 10.-2 und 10.-1 in dem durch die Verschiebung frei gewordenen oberen Bereich des Bearbeitungsplans 6 ergänzt.

Um die Verschiebung der Fahrgassen 10 durchzuführen, sind hier im Ausführungsbeispiel die einzelnen Bedienelemente der Bedienfläche 11, die vormals als "geeignete Mittel" bezeichnet sind, vorgesehen. Mit Hilfe der Bedienelemente, die im Ausführungsbeispiel als Teil eines berührungsempfindlichen Displays ausgeführt und durch Berührung bedient werden, lässt sich eine der Fahrgassen 10 auswählen und beliebig oder in Abhängigkeit der Arbeitsbreite verschieben. Des Weiteren lässt sich die ausgewählte Fahrgasse 10 einzeln verschieben oder die weiteren Fahrgassen 10 werden an der verschobenen Fahrgasse 10 ausgerichtet.

Die vorstehend beschriebene landwirtschaftliche Maschine mit Planungssystem zur Planung der Bearbeitung eines Feldes wird gemäß der folgenden Verfahrensschritte betrieben:
a. Erfassen von zumindest jeweils einem feldinternen Start- und Endpunkt durch Überfahrt auf dem Feld zum Erstellen von zumindest einer feldspezifischen Referenzlinie,
b. Erstellen der zumindest einen feldspezifischen Referenzlinie aus einem feldinternen Start- und einem feldinternen Endpunkt,
c. Ableitung von zumindest einem Bearbeitungsplan basierend auf der feldspezifischen Referenzlinie
   i. Nummerierung der Fahrgassen,
   ii. Markierung zumindest einer Fahrgasse,
   iii. Anzeige des Bearbeitungsplan auf der Terminaleinheit,
   iv. und/oder Verschiebung der aneinander grenzenden Fahrgassen des Bearbeitungsplans abhängig von den maschinenspezifischen Daten der landwirtschaftlichen Maschine durch den Benutzer und/oder zumindest annährend beliebige Verschiebung dieser Fahrgassen durch den Benutzer.
Auch bei einem Wechsel von Anschlussfahrweise zu Beetefahrweise wird so die Möglichkeit gegeben, dass durch den Bearbeitungsplan das Feld zumindest annährend optimal deckend bearbeitet wird.

### Bezugszeichenliste

- 1: Landwirtschaftliche Zugmaschine
- 2: Sämaschine
- 3: Terminaleinheit
- 4: Jobrechner
- 5: Feld
- 6: Bearbeitungsplan
- 7: Startpunkt
- 8: Endpunkt
- 9: Feldgrenze
- 10: Fahrgasse
- 10.-2 - 10.9: Fahrgasse
- 11: Bedienfläche

## Patentansprüche

1. Landwirtschaftliche Maschine mit einem Planungssystem zur Planung der Bearbeitung eines Feldes, wobei das Planungssystem einen Jobrechner und eine Terminaleinheit umfasst, wobei der Jobrechner zum Erzeugen feldspezifischer Referenzlinien eingerichtet ist, wobei eine Referenzlinie durch einen Start- und einen Endpunkt begrenzt wird und basierend auf dieser zumindest einen Referenzlinie aneinander grenzende Fahrgassen für einen Bearbeitungsplan abgeleitet werden, wobei die Fahrgassen im Wesentlichen parallel zur Referenzlinie liegen und zur Anordnung der Fahrgassen maschinenspezifische Daten der landwirtschaftlichen Maschine berücksichtigt werden und die zumindest eine Referenzlinie und der abgeleitete Bearbeitungsplan auf der Terminaleinheit angezeigt wird und/oder die zumindest eine Referenzlinie und der abgeleitete Bearbeitungsplan von einem Benutzer mittels der Terminaleinheit bearbeitet werden können, **dadurch gekennzeichnet, dass** zumindest eine der aneinander grenzenden Fahrgassen (10) des Bearbeitungsplans (6) abhängig von den maschinenspezifischen Daten der landwirtschaftlichen Maschine durch den Benutzer nachträglich verschiebbar ist und/oder die zumindest eine Fahrgasse (10) durch den Benutzer nachträglich zumindest annährend beliebig verschiebbar ist, so dass durch den Bearbeitungsplan (6) das Feld zumindest nahezu optimal deckend bearbeitet wird.

2. Landwirtschaftliche Maschine nach Anspruch 1, **dadurch gekennzeichnet, dass** zumindest die im Feldinnern liegende, der Feldgrenze (9) nahste Fahrgasse (10) des Bearbeitungsplans (6) abhängig von den maschinenspezifischen Daten der landwirtschaftlichen Maschine durch den Benutzer nachträglich verschiebbar ist und/oder die zumindest eine Fahrgasse (10) durch den Benutzer nachträglich zumindest annährend beliebig verschiebbar ist.

3. Landwirtschaftliche Maschine nach zumindest einem der vorstehenden Ansprüche, **dadurch gekennzeichnet, dass** die Terminaleinheit (3) dazu eingerichtet ist alle Fahrgassen (10) zu nummerieren und die Nummerierung dem Benutzer anzuzeigen.

4. Landwirtschaftliche Maschine nach zumindest einem der vorstehenden Ansprüche, **dadurch gekennzeichnet, dass** die Nummerierung der Fahrgassen (10) nach einer Verschiebung der zumindest einen Fahrgasse (10) durch den Benutzer erhalten bleibt.

5. Landwirtschaftliche Maschine nach zumindest einem der vorstehenden Ansprüche, **dadurch gekennzeichnet, dass** die Terminaleinheit (3) zur Markierung von zumindest einer Fahrgasse (10) eingerichtet ist, dass die Markierung der Fahrgassen (10) durch den Benutzer anhand der Nummerierung einstellbar ist.

6. Verfahren zum Betreiben der landwirtschaftlichen Maschine nach zumindest einem der vorstehenden Ansprüche, **gekennzeichnet durch** die folgenden Verfahrensschritte:
a. Erfassen von zumindest jeweils einem feldinternen Start- (7) und Endpunkt (8) durch Überfahrt auf dem Feld (5) zum Erstellen von zumindest einer feldspezifischen Referenzlinie,
b. Erstellen der zumindest einen feldspezifischen Referenzlinie aus einem feldinternen Start- (7) und einem feldinternen Endpunkt (8),
c. Ableitung von zumindest einem Bearbeitungsplan (6) basierend auf der feldspezifischen Referenzlinie
i. Nummerierung der Fahrgassen (10),
ii. Markierung zumindest einer Fahrgasse (10),
iii. Anzeige des Bearbeitungsplan (6) auf der Terminaleinheit (3),
iv. und/oder Verschiebung der aneinander grenzenden Fahrgassen (10) des Bearbeitungsplans (6) abhängig von den maschinenspezifischen Daten der landwirtschaftlichen Maschine durch den Benutzer und/oder zumindest annährend beliebige Verschiebung dieser Fahrgassen (10) durch den Benutzer,
so dass durch den Bearbeitungsplan (6) das Feld (5) zumindest annährend optimal deckend bearbeitet wird.
